Europäisches Patentamt

European Patent Office

Office européen des brevets

(19)

(11) Veröffentlichungsnummer : **0 325 956 B1**

(12) # EUROPÄISCHE PATENTSCHRIFT

(45) Veröffentlichungstag der Patentschrift :
**17.06.92 Patentblatt 92/25**

(51) Int. Cl.⁵ : **F25J 3/08,** C01B 3/52,
C01B 3/12, C10K 1/16,
F25J 3/00

(21) Anmeldenummer : **89100467.3**

(22) Anmeldetag : **12.01.89**

(54) **Verfahren zum Reinigen eines Gasgemisches.**

(30) Priorität : **28.01.88 DE 3802552**

(43) Veröffentlichungstag der Anmeldung :
**02.08.89 Patentblatt 89/31**

(45) Bekanntmachung des Hinweises auf die
Patenterteilung :
**17.06.92 Patentblatt 92/25**

(84) Benannte Vertragsstaaten :
**BE DE FR GB NL SE**

(56) Entgegenhaltungen :
**DE-A- 2 550 171**
**DE-A- 3 532 248**

(73) Patentinhaber : **Linde Aktiengesellschaft**
**Abraham-Lincoln-Strasse 21**
**W-6200 Wiesbaden (DE)**

(72) Erfinder : **Schmid, Wolfgang, Dipl.-Ing.**
**Stümpflingstrasse 13**
**W-8022 Grünwald (DE)**
Erfinder : **Becker, Hans, Dr. Ing.**
**Zwengauerweg 9**
**W-8000 München 71 (DE)**
Erfinder : **Landes, Herwig, Dipl.-Ing.**
**Am Unterfeld 4**
**W-8120 Weilheim (DE)**
Erfinder : **Jungfer, Hans, Dipl.-Ing.**
**Bertha-von Suttner-Weg 7f**
**W-8033 Planegg (DE)**

(74) Vertreter : **Schaefer, Gerhard, Dr.**
**Linde Aktiengesellschaft Zentrale**
**Patentabteilung**
**W-8023 Höllriegelskreuth (DE)**

## Beschreibung

Die Erfindung betrifft ein Verfahren zum Reinigen eines im wesentlichen aus Wasserstoff bestehenden Gasgemisches, das z.B Kohlenmonoxid, Methan und Argon als Verunreinigungen enthält, durch Wäsche mit flüssigem Stickstoff nach dem ersten Teil des Anspruchs 1.

Ein derartiges Verfahren wird in der DE-PS 947 711 beschrieben. Insbesondere wird in dem bekannten Verfahren etwa im oberen Teil der unteren Hälfte der Waschsäule über einen Seitenabzug eine kohlenmonoxidarme Stickstofffraktion in flüssiger Formentnommen, um so die Kohlenmonoxidkonzentration in der verunreinigten Waschflüssigkeit, welche am Sumpf der Waschsäule abgezogen wird, zu erhöhen.

Da es sich bei dem bekannten Verfahren um ein Verfahren aus den 50-iger Jahren handelt, wird dabei aus Sicherheitsgründen und mangelnder Berechenbarkeit mit einem wesentlichen Überschuß an flüssigem Stickstoff gearbeitet, was einerseits die Waschsäulenhöhe günstig beeinflußt, andererseits aber zu einer erheblichen CO-Verdünnung im Sumpf der Waschsäule führt. Der Seitenabzug hat daher in dem bekannten Verfahren den Zweck, den überschüssigen Waschstickstoff abzuführen. Dieses kommt auch darin zum Ausdruck, daß die Kohlenmonoxidkonzentration in der entnommenen fraktion nur maximal 5% beträgt.

Durch das bekannte Verfahren wird zwar die CO-Konzentration im Sumpf und damit der Heizwert dieser Restgasfraktion maximiert, der heute aus wirtschaftlichen Gründen erwünschte Einsatz des CO für andere als Heizwecke wird durch das bekannte Verfahren jedoch nur unwesentlich erleichtert, da die Sumpffraktion nach wie vor das gesamte im Einsatzgas enthaltene Argon und Methan enthält und das CO daher vor einer Wiederverwendung erst aufwendig abgetrennt werden muß.

Der Erfindung liegt daher die Aufgabe zugrunde, ein Verfahren der eingangs genannten Art so zu verbessern, daß die Aufarbeitung des Restgases aus der Stickstoffwäsche wesentlich vereinfacht und damit kostengünstiger wird, insbesondere daß die CO-Rückgewinnung und die weitere Auftrennung des Sumpfes erleichtert werden.

Diese Aufgabe wird erfindungsgemäß durch ein Verfahren nach dem Anspruch 1 gelöst.

Grundlage der Erfindung ist die Überlegung, daß beim bekannten Verfahren das Kohlenmonoxid zusammen mit den Verunreinigungen Argon und Methan aus dem Sumpf der Waschsäule abgezogen wird. Damit ist eine direkte Weiterverwendung nur als Heizgas möglich, was aber aufgrund des relativ hohen CO-Anteils im Restgas wirtschaftlich ungünstig ist. Die weitere CO-Abtrennung bedeutet erheblichen zusätzlichen apparativen Aufwand, der mit dem erfindungsgemäßen Verfahren vermieden werden kann.

Als besonders günstig im Hinblick auf die Weiterverarbeitung hat es sich erwiesen, daß die zwischen dem oberen und dem unteren Abschnitt der Waschkolonne entnommene Teilmenge der Waschflüssigkeit mindestens 20% CO enthält.

Die räumliche Teilung der Waschkolonne in zwei Abschnitte wird beispielsweise durch einen Kaminboden erreicht, der im mittleren Teil der unteren Hälfte der Waschkolonne installiert ist, und der es ermöglicht, die aus dem oberen Abschnitt anfallende Waschmittelmenge auf den Seitenabzug und auf den unteren Abschnitt aufzuteilen. Es ist günstig, die Waschmittelmenge für den unteren Abschnitt so zu bemessen, daß in diesem aus dem Gasgemisch mindestens das Methan vollständig ausgewaschen wird. Durch entsprechende Wahl der Waschmittelmenge im unteren Abschnitt kann der Seitenabzug, d.h. die CO-reiche fraktion, beliebig wenig Methan enthalten.

Besonders vorteilhaft ist eine Verfahrensführung derart, daß die CO-reiche Fraktion wenige ppm $CH_4$ enthält, eventuell sogar unter 1 ppm. Dieses wiederum begünstigt es außerordentlich, die zwischen dem oberen und dem unteren Abschnitt der Waschkolonne entnommene Teilmenge der Waschflüssigkeit erfindungsgemäß zur Gewinnung einer Rein-CO-Fraktion einer Druckwechseladsorption zuzuführen. In diesem Zusammenhang ist außerdem vorgesehen, daß die entnommene Teilmenge der Waschflüssigkeit vor Eintritt in die Druckwechseladsorptionsanlage entspannt - beispielsweise in einem Entspannungsbehälter - und der dabei freigesetzte Wasserstoff rückgeführt wird.

Gemäß einer weiteren bevorzugten Ausführungsform des erfindungsgemäßen Verfahrens wird die zwischen dem oberen und dem unteren Abschnitt der Waschkolonne entnommene Teilmenge der Waschflüssigkeit einer CO-Shift-Konvertierung zwecks Gewinnung von Wasserstoff zugeführt.

Im Hinblick auf eine möglichst vollständige und vielfältige Verwendung der bei der Wäsche entstandenen Fraktionen ist es zweckmäßig, die zwischen dem oberen und dem unteren Abschnitt der Waschkolonne entnommene Teilmenge der Waschflüssigkeit zum einen Teil einer CO-Shift-Konvertierung zwecks Gewinnung von Wasserstoff sowie zum anderen Teil zur Gewinnung einer Rein-CO-Fraktion einer Druckwechseladsorption zuzuführen.

Eine größtmögliche Wirtschaftlichkeit des erfindungsgemäßen Verfahrens läßt sich in vorteilhafter Weise erreichen, indem die im Sumpf der Waschkolonne entstehende Fraktion einer Argongewinnung zugeführt wird.

Damit bietet das erfindungsgemäße Verfahren insgesamt den Vorteil, daß durch die Abgabe zweiter getrennter Waschmittelströme die Aufarbeitung des Restgases aus der Stickstoffwäsche wesentlich erleichtert bzw. kostengünstiger wird, da der Hauptanteil des Kohlenmonoxids nicht erst mit dem Argon und dem Methan vermischt und als gemeinsamer Strom abgegeben wird. Auch ist der Investitionsmehraufwand gegenüber dem bekannten Verfahren gering und es entstehen keine zusätzlichen Betriebskosten.

Das erfindungsgemäße Verfahren ist bei allen Verfahren zur Reinigung von im wesentlichen aus Wasserstoff bestehenden Gasgemischen, bei denen eine Wäsche mit flüssigem Stickstoff Bestandteil ist, einsetzbar. Eines der wesentlichen Verfahren ist dabei das Verfahren zur Gewinnung von $NH_3$-Synthesegas.

Im folgenden sei das erfindungsgemäße Verfahren anhand von drei schematisch dargestellten Ausführungsbeispielen erläutert.

Hierbei zeigen:

Figur 1 eine Stickstoffwäsche mit $H_2$-Rückführung und Rein-CO-Gewinnung durch Druckwechseladsorption.

Figur 2 Die Einbindung einer Stickstoffwäsche mit Vorwäsche in eine $NH_3$-Gewinnungsanlage.

Figur 3 Eine Stickstoffwäsche mit CO-Rückführung und Rein-CO-Gewinnung durch Druckwechseladsorption.

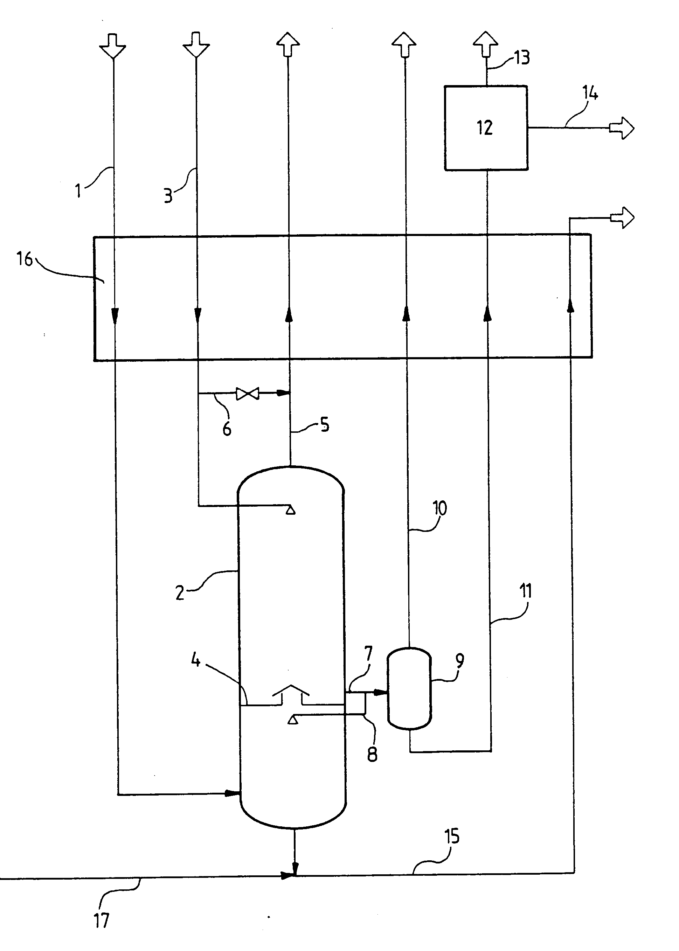

Gemäß Figur 1 wird über Leitung 1 ein Rohgasgemisch bestehend aus

96,72% $H_2$

0,18% $N_2$,

2,31% CO,

0,55% Argon und

0,24% $CH_4$

bei einer Temperatur von 85 K und einem Druck von 73,4 bar einer Waschkolonne 2 zugeführt. Der Waschkolonne 2 wird am Kopf über Leitung 3 flüssigr Hochdruck-Stickstoff, der noch mit 0,02% Argon und 0,001% $O_2$ verunreinigt ist, mit einer Temperatur von ebenfalls 85 K als Waschmittel aufgegeben.

Ein Kaminboden 4, der im unteren Drittel der Waschkolonne 2 installiert ist, unterteilt die Waschkolonne 2 in zwei Abschnitte derart, daß oberhalb des Kaminbodens 4 eine theoretische Bodenzahl von 26 und darunter eine theoretische Bodenzahl von 6 erreicht wird. Auf diese Weise verläßt ein Gasgemisch mit 91,19% $H_2$, 8,81% $N_2$ sowie 1 ppm CO und 10 ppm Ar über Kopf die Waschkolonne 2 via Leitung 5 bei einer Temperatur von 80,5 K. Bei Einsatz dieses Gasgemisches als Synthesegas für eine $NH_3$-Gewinnung besteht die Möglichkeit mittels über Leitung 6 herangeführtem Hochdruck-Stickstoff ein stöchiometrisches Gemisch herzustellen.

Oberhalb des Kaminbodens 4 wird eine mit Kohlenmonoxid angereicherte Fraktion über einen Seitenabzug 7 abgezogen und nachdem ein Teilstrom 8 hiervon wieder in den unteren Teil der Waschkolonne 2 rückgeführt worden ist, einem Entspannungsbehälter 9 mit einer Temperatur von 80,6 K zugeführt. Nach der Entspannung auf z.B. 25 bar wird über Leitung 10 ein im wesentlichen nur noch Wasserstoff enthaltender Gasstrom mit folgender Zusammensetzung:

90% $H_2$,

6,37% $N_2$,

3,28% CO,

0,36% Argon

abgezogen und beispielsweise zu einer - nichtdargestellten - Sauergaswäsche innerhalb einer $NH_3$-Gewinnungsanlage rückgeführt.

Vom Boden des Entspannungsbehälters 9 wird eine nahezu $CH_4$-freie Kohlenmonoxidreiche Fraktion (Leitung 11) abgezogen, welche

4,89% $H_2$

51,01% $N_2$,

37,48% CO

6,61% Argon und

20 ppm $CH_4$

enthält, und einer nicht näher dargestellten Druckwechseladsorption (DWA) 12 zur Gewinnung von Rein-CO zugeführt wird. Über Leitungen 13 und 14 werden das Rein-CO als Produkt und ein verbleibendes Restgas aus der DWA abgeführt.

Die dritte bei der Stickstoffwäsche entstehende Fraktion wird am Sumpf der Waschkolonne 2 mit 82,8 K und und 73,4 bar abgezogen (Leitung 15) und hat folgende Zusammensetzung:

9,48% $H_2$,

2,15%   N₂,

43,45%   CO,

21,48%   Argon und

23,45%   CH₄.

Somit wird deutlich, daß die Sumpffraktion praktisch das gesamte Methan enthält.

Die bei der Wäsche entstehenden Fraktionen (Leitungen 5, 10, 11 und 15) werden allesamt in einem Wärmetauscher 16 zur Abkühlung des Rohgasgemisches 1 sowie des Hochdruck-Stickstoffs 3 auf die Arbeitstemperatur der Stickstoffwäsche eingesetzt. Bei entsprechend hohem Abgabedruck der Restgasströme (Leitung 11 und 15) kann es erforderlich sein, die Kältebilanz der Anlage durch Zuführung von flüssigem Stickstoff über Leitung 17 auszugleichen.

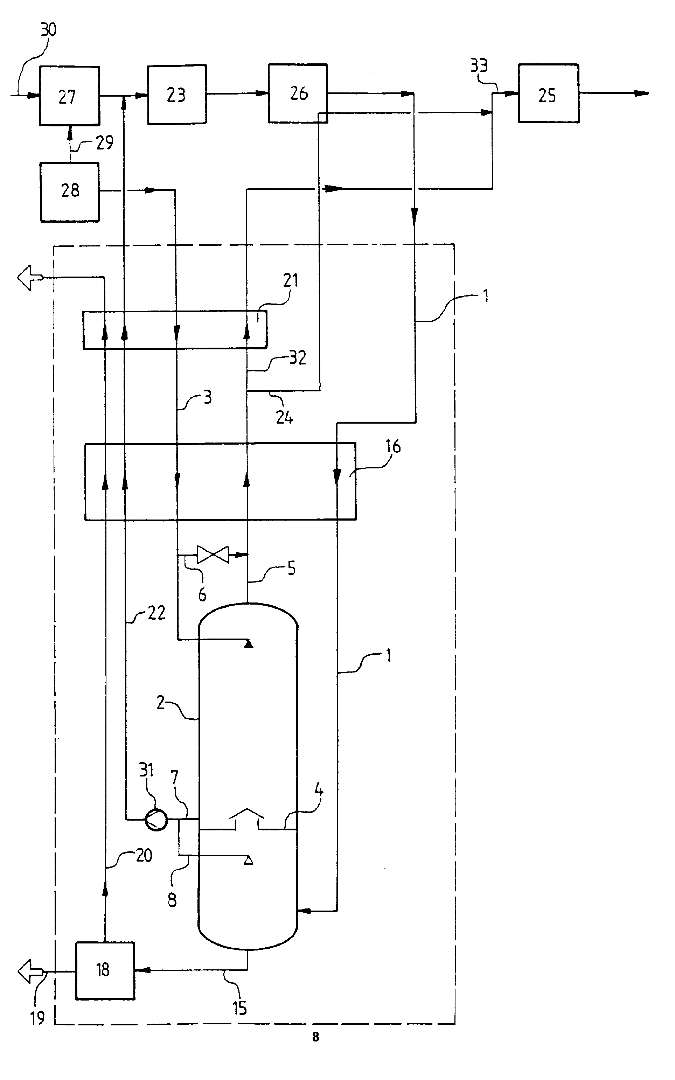

Figur 2 zeigt schematisch die Einbindung einer erfindungsgemäßen, vorstehend anhand von Figur 1 bereits beschriebenen Stickstoffwäsche (im gestrichelten Bereich) in eine NH₃-Synthesegasanlage, wobei die einzelnen Anlagenteile nicht näher dargestellt sind. Gleiche Elemente der Stickstoffwäsche haben dabei die gleiche Bezeichnung erhalten wie in Figur 1.

Der Rohstoff (z.B. Kohle oder Öl) aus Leitung 30 der dargestellten Ammoniakanlage wird durch partielle Oxidation 27 vergast. Der hierfür notwendige Sauerstoff wird über Leitung 29 vom Luftzerleger 28 herangeführt. Dieser liefert gleichzeitig den für die Wäsche notwendigen Stickstoff (Leitung 3). Das so erzeugte Rohgas wird einer CO-Shift-Konvertierung 23 und einer Sauergasentfernung durch eine kalte Methanolwäsche 26 unterworfen.

In der Methanolwäsche 26 bereits vorgekühlt, gelangt das Rohgas dann über Leitung 1 in die Stickstoffwäsche, deren Ausführung praktisch identisch ist mit der bereits gemäß Figur 1 beschriebenen, nur wird bei dieser Anwendung der Seitenstrom 7 nicht entspannt um eine Wasserstoffrückführung zu gewinnen, vielmehr wird der Seitenstrom 7 durch die Pumpe 31 auf einen so hohen Druck gepumpt, daß die CO-reiche Fraktion über Leitung 22 vor die CO-Shift-Konvertierung 23 zurückgeführt werden kann. Außerdem kann bei Bedarf das Sumpfprodukt der Waschkolonne 2 über Leitung 15 einer nicht näher dargestellten Argongewinnung 18 zugeführt werden. In diesem Fall wird über Leitung 19 flüssiges Argon als Produkt abgegeben, während das verbleibende Restgas über Leitung 20 abgeführt wird.

Das für die NH₃-Synthese notwendige Stickstoff-Wasserstoffhältnis wird durch Zugabe von weiterem Stickstoff (über Leitung 6) in die Leitung 5 zum Kopfprodukt der Waschkolonne 2 eingestellt. Das so erzeugte NH₃-Synthesegas wird zunächst im Wärmetauscher 16 auf die Arbeitstemperatur der Sauergaswäsche 26 angewärmt. Die weitere Anwärmung des Synthesegases auf Umgebungstemperatur erfolgt teilweise im Tauscher 21 gegen Stickstoff, teilweise innerhalb der Sauergaswäsche 26 gegen Rohgas, bevor der wiedervereinigte Gesamtstrom über Leitung 33 der nicht näher dargestellten NH₃-Synthese 25 zugeführt wird.

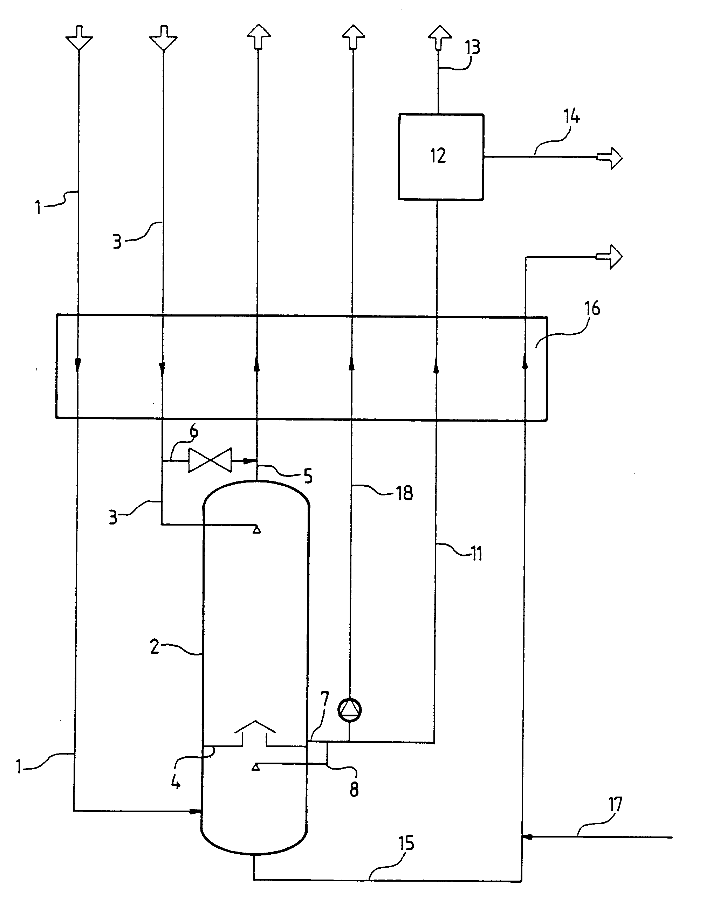

Das Verfahren gemäß Figur 3 ist praktisch identisch mit dem gemäß Figur 1 mit der Ausnahme, daß die mit Kohlenmonoxid angereicherte Fraktion 7 nicht entspannt wird, sondern daß ein Teilstrom 18 hiervon vor die CO-Shift-Konvertierung einer NH₃-Gewinnung (nicht dargestellt) rückgeführt und der verbleibende Teilstrom 11 - analog Figur 1 - einer Druckwechseladsorption 12 zugeführt wird. Im vorliegenden Ausführungsbeispiel wird dabei das Rohgasgemisch über Leitung 1 mit 83 K und 45 bar aufgegeben.

Die Zusammensetzungen der in die Waschkolonne 2 ein- oder austretenden Fraktionen sind dabei folgende:

| Leitung | 1 | 15 | 7 | 3 | 5 |
|---|---|---|---|---|---|
| H₂ | 93,13% | 6,71% | 8,64% | - | 91,9% |
| N₂ | 1,06% | 8,14% | 27,70% | 99,98% | 8,1% |
| CO | 4,63% | 52,40% | 56,49% | - | - |
| Ar | 0,69% | 11,32% | 7,17% | 0,02% | - |
| CH₄ | 0,49% | 21,43% | - | - | - |

**Patentansprüche**

1. Verfahren zum Reinigen eines im wesentlichen aus Wasserstoff bestehenden Gasgemisches, das z.B. Kohlenmonoxid, Methan und Argon als Verunreinigungen enthält, durch Wäsche mit flüssigem Stickstoff in einer aus zwei Abschnitten bestehenden Waschkolonne, wobei der flüssige Stickstoff auf den oberen Abschnitt der Waschkolonne aufgegeben wird, wobei zwischen dem oberen und dem unteren Abschnitt eine Kohlenmonoxid-haltige Teilmenge der Waschflüssigkeit entnommen wird und wobei der flüssige Stickstoff in einer Menge aufgegeben wird, die zur nahezu vollständigen Auswaschung des Kohlenmonoxids ausreicht, **dadurch gekennzeichnet**, daß die Entnahmemenge so bemessen wird, daß die auf den unteren Abschnitt der Waschkolonne aufgegebene Waschmittelrestmenge ausreicht, um aus dem Gasgemisch zwar das Methan auszuwaschen, aber den Großteil des Kohlenmonoxids noch im Gasgemisch zu belassen, und daß dieser Großteil im oberen Teil der Waschkolonne ausgewaschen, und mit der Teilmenge entnommen wird.

2. Verfahren nach Anspruch 1, dadurch gekennzeichnet, daß die zwischen dem oberen und unteren Abschnitt der Waschkolonne entnommene Teilmenge der Waschflüssigkeit mindestens 20% CO enthält.

3. Verfahren nach Anspruch 1 oder 2, dadurch gekennzeichnet, daß die zwischen dem oberen und dem unteren Abschnitt der Waschkolonne entnommene Teilmenge der Waschflüssigkeit zur Gewinnung einer Rein-CO-Fraktion einer Druckwechseladsorptionsanlage zugeführt wird.

4. Verfahren nach Anspruch 3, dadurch gekennzeichnet, daß die zwischen dem oberen und dem unteren Abschnitt der Waschkolonne entnommene Teilmenge der Waschflüssigkeit vor Eintritt in die Druckwechseladsorption entspannt und der dabei freigesetzte Wasserstoff rückgeführt wird.

5. Verfahren nach Anspruch 1 oder 2, dadurch gekennzeichnet, daß die zwischen dem oberen und dem unteren Abschnitt der Waschkolonne entnommene Teilmenge der Waschflüssigkeit einer CO-Shift-Konvertierung zwecks Gewinnung von Wasserstoff zugeführt wird.

6. Verfahren nach einem der Ansprüche 1 oder 2, dadurch gekennzeichnet, daß die zwischen dem oberen und dem unteren Abschnitt der Waschkolonne entnommene Teilmenge der Waschflüssigkeit zum einen Teil einer CO-Shift-Konvertierung zwecks Gewinnung von Wasserstoff sowie zum anderen Teil zur Gewinnung einer Rein-CO-Fraktion einer Druckwechseladsorption zugeführt wird.

7. Verfahren nach Anspruch 1 oder 2, dadurch gekennzeichnet, daß die im Sumpf der Waschkolonne entstehende Fraktion einer Argongewinnung zugeführt wird.

**Claims**

1. A process for the purification of a gas mixture which consists substantially of hydrogen and which contains, for example, carbon monoxide, methane and argon as impurities, by scrubbing with liquid nitrogen in a scrubbing column composed of two sections, wherein the liquid nitrogen is supplied to the upper section of the scrubbing column, wherein at least one of the fractions produced by the scrubbing process is fed to a synthesis stage or to a further separation stage, wherein a sub-quantity of the scrubbing liquid containing carbon monoxide is extracted between the upper section and the lower section, and wherein the liquid nitrogen is supplied in a quantity which is sufficient to approximately completely scrub out the carbon monoxide, characterised in that the quantity to be extracted is contrived to be such that the residual quantity of scrubbing agent supplied to the lower section of the scrubbing column is sufficient to scrub out the methane from the gas mixture but still to leave the majority of the carbon monoxide in the gas mixture, and that the said majority of the carbon monoxide is scrubbed out in the upper part of the scrubbing column and is extracted with the sub-quantity.

2. A process as claimed in Claim 1, characterised in that the sub-quantity of the scrubbing liquid extracted between the upper section and lower the section of the scrubbing column contains at least 20% CO.

3. A process as claimed in Claim 1 or 2, characterised in that the sub-quantity of the scrubbing liquid extracted between the upper section and the lower section of the scrubbing column is supplied to a pressure change adsorption stage for the recovery of a pure CO fraction.

4. A process as claimed in Claim 3, characterised in that the sub-quantity of the scrubbing liquid extracted between the upper section and the lower section of the scrubbing column is expanded before entering the pressure change adsorption stage and the hydrogen thereby released is recycled.

5. A process as claimed in Claim 1 or 2, characterised in that the sub-quantity of the scrubbing liquid extracted between the upper section and the lower section of the scrubbing column is supplied to a CO shift conversion stage for the recovery of hydrogen.

6. A process as claimed in one of Claims 1 or 2, characterised in that one part of the sub-quantity of the scrubbing liquid extracted between the upper section and the lower section of the scrubbing column is fed to a CO shift conversion stage for the recovery of hydrogen and the other part thereof is fed to a pressure change adsorption stage for the recovery of a pure CO fraction.

7. A process as claimed in Claim 1 or 2, characterised in that the fraction produced in the bottom of the scrubbing column is fed to an argon recovery stage.

## Revendications

1. Procédé de purification d'un mélange gazeux composé substantiellement d'hydrogène, qui contient par exemple du monoxyde de carbone, du méthane et de l'argon en tant qu'impuretés, par lavage avec de l'azote liquide dans une colonne de lavage constituée de deux sections, dans laquelle l'azote liquide est alimenté au niveau de la section haute, dans laquelle au moins une fraction provenant du lavage subit une synthèse ou une séparation ultérieure, dans laquelle une partie du flux de lavage contenant le monoxyde de carbone est prélevée entre les sections haute et basse, et dans laquelle l'azote liquide et alimenté en une quantité suffisante pour que l'extraction par lavage du monoxyde de carbone soit presque complète, caractérisé en ce que les flux prélevés sont répartis de sorte que le flux du liquide de lavage alimentant la section basse est suffisant pour extraire du mélange gazeux presque tout le méthane, mais aussi pour laisser la majeure partie du monoxyde de carbone encore dans le mélange gazeux et en ce que cette majeure partie est séparée par lavage dans la section basse de la colonne de lavage, et en ce qu'elle est prélevée avec la partie du flux de lavage.

2. Procédé de purification selon la revendication 1, caractérisé en ce que la partie du flux de lavage prélevée entre les sections haute et basse de la colonne de lavage contient au moins 20% de CO.

3. Procédé de purification selon la revendication 1 ou 2, caractérisé en ce que la partie du flux de lavage prélevée entre les sections haute et basse de la colonne de lavage alimente la production d'une fraction pure de CO d'une installation d'adsorption modulée en pression.

4. Procédé de purification selon la revendication 3, caractérisé en ce que la partie du flux de lavage prélevée entre les sections haute et basse de la colonne de lavage se détend à l'entrée de l'installation d'adsorption modulée en pression et en ce que l'hydrogène libéré est recyclé.

5. Procédé de purification selon la revendication 1 ou 2, caractérisé en ce que la partie du flux de lavage prélevée entre les sections haute et basse de la colonne de lavage alimente une conversion catalytique du CO pour obtenir de l'hydrogène.

6. Procédé de purification selon la revendication 1 ou 2, caractérisé en ce que la partie du flux de lavage prélevée entre les sections haute et basse de la colonne de lavage alimente, pour une partie, la conversion catalytique du CO pour obtenir de l'hydrogène ainsi que, pour l'autre partie, la production d'une fraction pure de CO d'une installation d'adsorption modulée en pression.

7. Procédé de purification selon la revendication 1 ou 2, caractérisé en ce que la fraction en pied de la colonne de lavage alimente une production d'argon.